# FASCICULE DE BREVET EUROPEEN

(11) **EP 3 506 170 B1**
(45) Date de publication et mention de la délivrance du brevet: **06.11.2024**
(21) Numéro de dépôt: 18213061.7
(22) Date de dépôt: 17.12.2018
(51) Int. Cl.: G06V 10/82, G06F 18/214, G06V 10/774, G06V 20/62, G06V 30/10

(54) **PROCÉDÉ DE FORMATION D'UN RÉSEAU DE NEURONES POUR LA RECONNAISSANCE D'UNE SÉQUENCE DE CARACTÈRES ET PROCÉDÉ DE RECONNAISSANCE ASSOCIÉ**
VERFAHREN ZUR ERZEUGUNG EINES NEURONENNETZES FÜR DIE ERKENNUNG EINER ZEICHENSEQUENZ, UND ENTSPRECHENDES ERKENNUNGSVERFAHREN
METHOD FOR FORMING A NEURAL NETWORK FOR RECOGNISING A SEQUENCE OF CHARACTERS AND ASSOCIATED RECOGNITION METHOD

(30) Priorité: 29.12.2017 FR 1763422
(43) Date de publication de la demande: 03.07.2019
(73) Titulaire: Bull SAS, 78340 Les Clayes-sous-Bois (FR); Commissariat à l'Energie Atomique et aux Energies Alternatives, 75015 Paris (FR)
(72) Inventeur: PELLETIER, Benoit, 38960 SAINT ETIENNE DE CROSSEY (FR); OSPICI, Mathieu, 38000 GRENOBLE (FR); PLATINI, Marc, 38100 GRENOBLE (FR)
(74) Mandataire: Plasseraud IP

(56) Documents cités:
- EP-A1- 3 182 334
- US-A1- 2015 347 859
- RAJA BALA ET AL: "Image simulation for automatic license plate recognition", PROCEEDINGS OF SPIE, vol. 8305, 8 February 2012 (2012-02-08), 1000 20th St. Bellingham WA 98225-6705 USA, pages 83050Z, XP055311740, ISSN: 0277-786X, ISBN: 978-1-5106-1533-5, DOI: 10.1117/12.912453
- XAVIER GLOROT ET AL: "Understanding the difficulty of training deep feedforward neural networks", PROCEEDINGS OF THE 13TH INTERNATIONAL CONFERENCE ON ARTIFICIAL INTELLIGENCE AND STATISTICS (AISTATS) 2010, 15 May 2010 (2010-05-15), XP055543031, Retrieved from the Internet <URL:http://www-prima.imag.fr/jlc/Courses/2016/PRML/XavierInitialisation.pdf> [retrieved on 20190116], DOI: 10.1016/j.neucom.2016.08.037
- DIEDERIK P KINGMA ET AL: "Adam: A Method for Stochastic Optimization", ICLR 2015, 23 July 2015 (2015-07-23), XP055425253, Retrieved from the Internet <URL:https://arxiv.org/pdf/1412.6980v8.pdf> [retrieved on 20171115]

## Description

### DOMAINE DE L'INVENTION

L'invention concerne le domaine des procédés de formation d'un réseau de neurones pour la reconnaissance d'une séquence de caractères, ainsi que le domaine des procédés de reconnaissance d'une séquence de caractères qui leur sont ensuite associés.

### CONTEXTE DE L'INVENTION

Il s'agit de reconnaître, pour la localiser et l'extraire, une séquence de caractères dans une image, de manière à la fois simple et efficace.

Selon un premier art antérieur, il est connu d'effectuer un apprentissage en profondeur (« deep learning » en langue anglaise) au cours duquel une séquence de caractères de format fixe prédéterminé et préalablement connu est extraite d'une image présentant un fond uni lui aussi fixe et préalablement connu, en effectuant une segmentation digitale tirant parti du format fixe de séquence dans l'image et préalablement connu.

Si ce premier art antérieur permet l'utilisation d'une base de données de séquences réelles pour l'apprentissage de taille relativement réduite, tout en permettant une reconnaissance ultérieure satisfaisante, c'est néanmoins avec deux inconvénients.

D'abord, le procédé ne fonctionne qu'avec une séquence de caractères de format fixe prédéterminé et préalablement connu. Ensuite, le procédé nécessite également des conditions prédéterminées sur le fond de l'image dont va devoir être extraite la séquence de caractères. En résumé, ce premier art antérieur relativement simple ne présente toutefois aucune flexibilité. En cas de besoin de flexibilité, il devient nécessaire de démultiplier les procédés utilisés et leur coordination devient alors très complexe, sans aucune garantie quant au résultat final obtenu.

Selon un deuxième art antérieur, il est connu d'effectuer un apprentissage en profondeur (« deep learning » en langue anglaise) au cours duquel une toute petite séquence de nombres uniquement est extraite d'une image, sans effectuer de segmentation digitale requérant un format fixe de séquence dans l'image et préalablement connu.

Un premier inconvénient de ce deuxième art antérieur est de nécessiter une base de données réelle de très grande taille, nombre de séquences réelles différentes de l'ordre du million, pour permettre un apprentissage se traduisant par une reconnaissance ultérieure satisfaisante. Un deuxième inconvénient de ce deuxième art antérieur est d'être limité aux chiffres et de ne pas englober également les lettres.

Le document RAJA BALA ET AL: "Image simulation for automatic license plate recognition",PROCEEDINGS OF SPIE, vol. 8305, 8 février 2012 (2012-02-08), page 83050Z, XP055311740, 1000 20th St. Bellingham WA 98225-6705 USA ISSN: 0277-786X, DOI: 10.1117/12.912453ISBN: 978-1-5106-1533-5 divulgue par ailleurs un procédé de génération d'images de synthèse pour entraîner un modèle de reconnaissance de plaques d'immatriculation.

### RESUME DE L'INVENTION

Le but de la présente invention est de fournir un procédé de formation d'un réseau de neurones pour la reconnaissance d'une séquence de caractères palliant au moins partiellement les inconvénients précités.

Plus particulièrement, l'invention vise à fournir un procédé de formation d'un réseau de neurones tel que défini dans la revendication 1, de manière à ce que, non seulement le procédé de reconnaissance d'une séquence de caractères dans une image basée sur ce procédé de formation d'un réseau de neurones reste robuste quel que soit le type de séquence de caractères à reconnaître et quel que soit le type d'image dans laquelle cette séquence de caractères est incluse, mais encore de manière à ce que cette robustesse soit obtenue, malgré un nombre habituellement très insuffisant de séquences de caractères réelles pour constituer une base de données de taille suffisante pour l'étape d'apprentissage du réseau de neurones pour garantir ensuite un procédé de reconnaissance qui serait robuste.

Dans l'invention proposée, c'est la combinaison, entre d'une part la structure particulière de la base de données artificielle de séquences de caractères et d'autre part le déroulement particulier de l'étape d'apprentissage par le réseau de neurones à l'aide de cette base de données artificielle de séquences de caractères, qui permet d'obtenir ultérieurement cette amélioration surprenante de la robustesse du procédé de reconnaissance des séquences réelles.

A cette fin, la présente invention propose un procédé de formation d'un réseau de neurones, pour la reconnaissance d'une séquence de caractères dans une image et sans format prédéfini, comprenant : une étape de réalisation d'une base de données artificielle de plusieurs séquences de caractères dans des images, certaines séquences étant générées aléatoirement, d'autres séquences provenant de transformations de séquences générées aléatoirement, une étape d'apprentissage, du réseau de neurones, à la reconnaissance d'une séquence de caractères dans une image, directement sur au moins certaines desdites séquences de ladite base de données artificielle, sans pré-découpage préalable de ces séquences en leurs caractères constitutifs.

A cette fin, la présente invention propose également un procédé de reconnaissance d'une séquence de caractères dans une image, comprenant : une étape de reconnaissance d'une séquence de caractères dans une image, par un réseau de neurones formé par un procédé de formation selon l'invention.

Selon des modes de réalisation de l'invention, au fur et à mesure que la robustesse s'améliore, tout ou partie des avantages des avantages suivants peuvent être obtenus : une identification d'une séquence de caractères dans une image avec des performances comparables à celles d'un être humain, une identification d'une séquence de caractères dans une image avec des caractères typographiques pas du tout normalisés avec des variations notamment en termes de taille, de police, de couleur, d'orientation, de luminosité, de flou, de bruit, une identification d'une séquence de caractères dans une image permettant un traitement temps réel pour un flux vidéo dépassant 24fps (fps pour « frames per second » en langue anglaise), une identification d'une séquence de caractères dans une image à partir d'un jeu très réduit de séquences de caractères réelles disponibles.

Selon des modes de réalisation de l'invention, les fonctionnalités d'une bibliothèque de logiciels de type flux tensoriel dite « TensorFlow » ont été utilisées pour entraîner et tester le réseau de neurones.

Selon des modes de réalisation de l'invention, le réseau de neurones profond formé par l'invention doit reconnaître une séquence de lettres et de chiffres dans une image, et/ou de taille variable mais limité à 8 caractères au maximum, et/ou avec un fond d'image hautement variable au niveau de sa taille, et pour reconnaître des plaques d'immatriculation de véhicules automobiles terrestres, par exemple de type voitures, camions et motos, et/ou à partir d'un jeu disponible de séquences de caractères réelles très réduit, par exemple de l'ordre de mille séquences seulement.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets précités de l'invention.

De préférence, le réseau de neurones est un réseau de neurones profond, comprenant de préférence au moins 4 couches de neurones, comprenant plus de préférence entre 5 et 10 couches de neurones, comprenant encore plus de préférence 7 couches de neurones.

Ainsi, le procédé de reconnaissance d'une séquence de caractères dans une image basée sur ce procédé de formation d'un réseau de neurones reste particulièrement robuste.

De préférence, le réseau de neurones profond est un réseau de neurones profond convolutif, comprenant de préférence des convolutions d'une taille comprise entre 3 et 10.

Ainsi, le procédé de reconnaissance d'une séquence de caractères dans une image basée sur ce procédé de formation d'un réseau de neurones reste particulièrement robuste.

De préférence, dans l'étape de réalisation de la base de données artificielle de plusieurs séquences de caractères dans des images, au moins 60% de ces séquences soit sont des séquences générées aléatoirement soit proviennent de transformations de séquences générées aléatoirement, de préférence au moins 90% de ces séquences soit sont des séquences générées aléatoirement soit proviennent de transformations de séquences générées aléatoirement, encore plus de préférence au moins 99% de ces séquences soit sont des séquences générées aléatoirement soit proviennent de transformations de séquences générées aléatoirement, avantageusement 100% de ces séquences soit sont des séquences générées aléatoirement soit proviennent de transformations de séquences générées aléatoirement.

Ainsi, le procédé de reconnaissance d'une séquence de caractères dans une image basée sur ce procédé de formation d'un réseau de neurones reste robuste quel que soit le type de séquence de caractères à reconnaître et quelle que soit le type d'image dans laquelle cette séquence de caractères est incluse, sinon malgré l'absence totale de séquences de caractères réelles, du moins malgré la présence d'un nombre habituellement beaucoup trop faible de séquences de caractères réelles, pour l'étape d'apprentissage du réseau de neurones.

De préférence, l'étape d'apprentissage, du réseau de neurones, à la reconnaissance d'une séquence de caractères dans une image, est réalisée directement sans pré-découpage préalable, pour au moins 60% desdites séquences de ladite base de données artificielle, de préférence pour au moins 90% desdites séquences de ladite base de données artificielle, encore plus de préférence pour au moins 99% desdites séquences de ladite base de données artificielle, avantageusement pour 100% desdites séquences de ladite base de données artificielle.

Ainsi, le procédé de reconnaissance d'une séquence de caractères dans une image basée sur ce procédé de formation d'un réseau de neurones reste encore plus robuste quel que soit le type de séquence de caractères à reconnaître et quel que soit le type d'image dans laquelle cette séquence de caractères est incluse.

De préférence, lesdites transformations sont : l'intercalation d'espaces de taille variable entre les caractères de certaines séquences de la base de données artificielle, et/ou l'utilisation de différents types de fonds de différentes tailles comme arrières plans des séquences de caractères à reconnaître.

Ainsi, le procédé de reconnaissance d'une séquence de caractères dans une image basée sur ce procédé de formation d'un réseau de neurones reste encore plus robuste quel que soit le type de séquence de caractères à reconnaître et quel que soit le type d'image dans laquelle cette séquence de caractères est incluse.

Une base de données d'apprentissage ne comprenant que des séquences de caractères uniformément espacés entre eux va rendre notablement plus fragile le procédé de reconnaissance dès que les caractères des séquences réelles à reconnaître seront aléatoirement espacés, ce qui est notamment le cas des plaques d'immatriculation qui sont de formats variés et qui peuvent comporter différentes largeurs d'espacement selon la position où ils se trouvent sur la plaque d'immatriculation.

Comme les séquences de caractères à reconnaître sont extraites des images dans lesquelles elles se trouvent avec le fond sur lequel elles se trouvent, la taille et la texture visuelle de ce fond sont également des paramètres plus critiques que les autres.

De préférence, lesdites transformations sont : des transformations géométriques pouvant inclure : agrandissements, et/ou réductions, et/ou rotations, et/ou translations, et/ou distorsions géométriques, et/ou autres déformations géométriques, et/ou des transformations par traitement d'image pouvant inclure : changements de couleurs, et/ou changements de niveaux de gris, et/ou rehaussements des contours, et/ou lissages des contours, et/ou autres traitements de l'intensité et/ou du contraste.

Ainsi, le procédé de reconnaissance d'une séquence de caractères dans une image basée sur ce procédé de formation d'un réseau de neurones reste encore plus robuste quel que soit le type de séquence de caractères à reconnaître et quel que soit le type d'image dans laquelle cette séquence de caractères est incluse, et également quelles que soient les conditions dans lesquelles ces séquences de caractères réelles sont photographiées ou autrement obtenues.

De préférence, la base de données artificielle de séquences comprend au moins 100.000 séquences différentes pour l'apprentissage, de préférence au moins 500.000 séquences différentes pour l'apprentissage, encore plus de préférence entre 500.000 et 2.000.000 séquences différentes pour l'apprentissage.

Ainsi, le procédé de reconnaissance d'une séquence de caractères dans une image basée sur ce procédé de formation d'un réseau de neurones sera plus robuste pour une taille importante de la base de données sur laquelle a été effectué son apprentissage.

En particulier, le fait que le réseau de neurones soit profond requiert une taille plus importante de la base de données sur laquelle a été effectué son apprentissage.

Le bénéfice obtenu par ce réseau de neurones profond, plus exigent sur la taille de la base de données artificielle d'apprentissage, est une plus grande robustesse ensuite lors du déroulement du procédé ultérieur de reconnaissance.

De préférence, la base de données artificielle de séquences comprend, d'une part entre un tiers et deux tiers de séquences générées aléatoirement, et d'autre part entre deux tiers et un tiers de séquences provenant de transformations de séquences générées aléatoirement, de préférence autant de séquences générées aléatoirement que de séquences provenant de transformations de séquences générées aléatoirement.

Ainsi, la base de données d'apprentissage du réseau de neurones réalise un bon compromis entre d'une part l'apprentissage du type de caractère à reconnaître dans la séquence et d'autre part la forme sous laquelle le caractère va se trouver dans la séquence à reconnaître. Une partie des séquences contenues dans la base de données artificielle et obtenues par transformations de séquences générées aléatoirement proviennent de transformations de séquences générées aléatoirement déjà contenues dans la base de données artificielle.

Ainsi, la base de données d'apprentissage du réseau de neurones est encore un peu plus efficace dans la mesure où les séquences de caractères à reconnaître, au moins en partie, vont se retrouver à la fois sous forme standard et sous forme inhabituelle.

De préférence, la base de données artificielle comprend des séquences de caractères dont les caractères typographiques ne sont pas normalisés et présentent au contraire : une taille variable, et/ou une police variable, et/ou une couleur variable, et/ou une orientation variable, et/ou une luminosité variable, et/ou un niveau de flou variable, et/ou un rapport signal à bruit variable.

Ainsi, le procédé de reconnaissance d'une séquence de caractères dans une image basée sur ce procédé de formation d'un réseau de neurones reste encore plus robuste quel que soit le type de séquence de caractères à reconnaître et quel que soit le type d'image dans laquelle cette séquence de caractères est incluse, et également quelles que soient les conditions dans lesquelles ces séquences de caractères réelles sont photographiées ou autrement obtenues.

De préférence, les caractères comprennent des lettres et des chiffres.

Ainsi, le procédé de reconnaissance d'une séquence de caractères dans une image basée sur ce procédé de formation d'un réseau de neurones sera plus robuste pour la reconnaissance de plaques d'immatriculation automobile.

De préférence, dans l'étape de réalisation de la base de données artificielle de plusieurs séquences de caractères dans des images, moins de 10% de ces séquences sont des séquences réelles photographiées, de préférence moins de 1% de ces séquences sont des séquences réelles photographiées, encore plus de préférence 0% de ces séquences sont des séquences réelles photographiées.

Ainsi, le procédé de reconnaissance d'une séquence de caractères dans une image basée sur ce procédé de formation d'un réseau de neurones reste robuste quel que soit le type de séquence de caractères à reconnaître et quelle que soit le type d'image dans laquelle cette séquence de caractères est incluse, sinon malgré l'absence totale de séquences de caractères réelles, du moins malgré la présence d'un nombre habituellement beaucoup trop faible de séquences de caractères réelles, pour l'étape d'apprentissage du réseau de neurones.

Les séquences de caractères de la base de données artificielle correspondent respectivement à des plaques d'immatriculation automobile.

Ceci est un mode de réalisation préférentiel comprenant beaucoup d'applications pratiques dans la circulation routière de véhicules, avantageusement de véhicules terrestres.

De préférence, la longueur de la séquence de caractères est comprise entre 1 et 9.

Ainsi, le fait de pouvoir déterminer à l'avance la longueur de la séquence de caractères à reconnaître et de pouvoir l'implémenter dans le procédé de reconnaissance comme dans le procédé de formation, rend ceux-ci plus efficaces, en particulier améliore leur compromis entre d'une part augmentation de l'efficacité de détection et d'autre part diminution du taux de fausses alarmes.

De préférence, l'étape d'apprentissage du réseau de neurones utilise, pour chaque caractère de la séquence de caractères à reconnaître, un tableau de probabilité représentatif dudit caractère.

Ainsi, le compromis entre efficacité pendant le déroulement du procédé de reconnaissance et simplicité pendant le déroulement du procédé de formation, réalisé au niveau de l'étape d'apprentissage, est amélioré.

De préférence, l'étape d'apprentissage du réseau de neurones utilise, pour comparer deux distributions de probabilités représentatives de la séquence de caractères à reconnaître, une fonction de coût.

L'utilisation d'une fonction de coût permet à l'apprentissage de converger plus rapidement.

De préférence, ladite fonction de coût est basée sur l'entropie croisée.

L'entropie croisée est une fonction de coût particulièrement efficace pour optimiser ces probabilités.

De préférence, la fonction de coût de la séquence de caractères est la somme des fonctions de coût de chaque caractère.

La sommation des fonctions de coût de chaque caractère pour obtenir la fonction de coût globale de la séquence de caractères présente un double avantage, d'abord d'être simple à mettre en oeuvre, ensuite de tout de même bien fonctionner malgré la complexité du procédé de reconnaissance d'une séquence de caractères de format non normalisé.

De préférence, ladite fonction de coût est minimisée par un optimiseur d'Adam.

L'optimiseur d'Adam minimise rapidement et efficacement cette fonction de coût.

De préférence, le chargement des données à l'entrée du réseau de neurones se fait par une queue asynchrone qui contient les fichiers à charger et les opérations à effectuer sur ces fichiers.

Cette stratégie de chargement se révèle ici particulièrement efficace.

De préférence, l'initialisation des poids dans le réseau de neurones est effectuée par un initialiseur de Xavier.

L'initialiseur de Xavier réduit de beaucoup le temps d'apprentissage du réseau de neurones dans ce procédé de formation, pour obtenir ensuite une robustesse comparable au niveau du procédé de reconnaissance.

De préférence, ladite étape de reconnaissance est précédée d'une étape d'extraction, de la séquence de caractères et du fond d'image voisin de cette séquence de caractères, hors du reste de l'image, seuls ladite séquence de caractères et ledit fond d'image voisin de cette séquence de caractères, à l'exclusion dudit reste de l'image, étant fournis au réseau de neurones.

Cette étape préalable d'extraction présente deux avantages importants. D'une part, elle facilite beaucoup le déroulement du reste du procédé de reconnaissance, en ayant enlevé beaucoup d'informations parasites lesquelles auraient risqué de perturber de manière notable ce déroulement. D'autre part, elle reste relativement facile à réaliser, car le fond d'image voisin de la séquence de caractères se détache et se distingue généralement assez nettement du reste de l'image plus brouillée et plus aléatoire.

De préférence, ledit fond d'image voisin de ladite séquence de caractères est un fond uni monocolore.

Cela améliore encore le deuxième avantage de cette étape préalable d'extraction, car le fond d'image voisin de la séquence de caractères se détache et se distingue encore plus nettement du reste de l'image au contraire plus brouillée et plus aléatoire.

Ladite séquence de caractères à reconnaître dans une image correspond à une plaque d'immatriculation automobile.

Ceci est un mode de réalisation préférentiel comprenant beaucoup d'applications pratiques dans la circulation routière de véhicules, avantageusement de véhicules terrestres.

De préférence, ladite étape de reconnaissance est effectuée en temps réel sur un flux vidéo d'images incluant les séquences de caractères à reconnaître, de préférence avec un flux vidéo supérieur à 10fps, plus de préférence avec un flux vidéo supérieur à 20fps.

Ceci est un mode de réalisation préférentiel comprenant des applications pratiques temps réel délicates dans la circulation routière de véhicules, comme par exemple la reconnaissance instantanée de plaques d'immatriculation automobile permettant d'afficher, en bord de route au niveau d'un radar pédagogique, au conducteur instantanément la vitesse de son véhicule.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple de déroulement du procédé de reconnaissance d'une séquence de caractères basé sur le procédé de formation d'un réseau de neurones selon un mode de réalisation de l'invention.
La figure 2 représente schématiquement un exemple de listing informatique en langue anglaise pour les deux bibliothèques de logiciels informatiques en langue anglaise que sont « OpenCV » et « TensorFlow », sous forme d'un organigramme d'implémentation conforme à un mode de réalisation de l'invention.
La figure 3 représente schématiquement un exemple du fonctionnement du réseau de neurones d'une part formé selon le procédé de formation d'un réseau de neurones et d'autre part utilisé selon le procédé de reconnaissance d'une séquence de caractères basé sur le procédé de formation d'un réseau de neurones selon un mode de réalisation de l'invention.
Les figures 4A, 4B et 4C représentent des exemples d'images de séquences de caractères incluses dans la base de données artificielle utilisée pour l'apprentissage du réseau de neurones selon un mode de réalisation de l'invention.
La figure 5 représente des exemples de résultat d'identification montrant l'efficacité du procédé de reconnaissance d'une séquence de caractères basé sur le procédé de formation d'un réseau de neurones selon un mode de réalisation de l'invention.

### DESCRIPTION DETAILLEE DE L'INVENTION

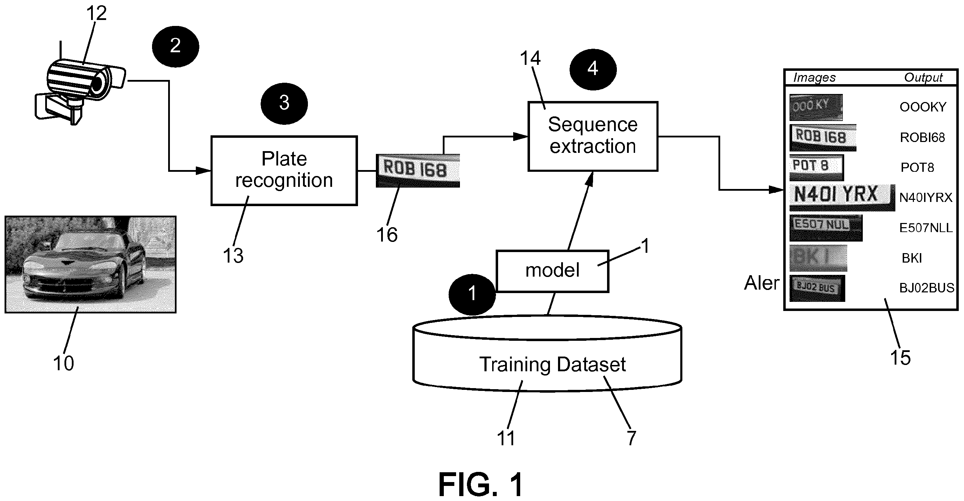

La figure 1 représente schématiquement un exemple de déroulement du procédé de reconnaissance d'une séquence de caractères basé sur le procédé de formation d'un réseau de neurones selon un mode de réalisation de l'invention.

Lors du procédé de formation du réseau de neurones 1, à partir d'une base de données 7 artificielle de séquences de caractères, un modèle de reconnaissance de séquences de caractères dans une image basé sur un réseau de neurones 1 effectue une étape d'apprentissage 11 en profondeur.

Lors du procédé de reconnaissance d'une séquence réelle de caractères, une voiture 10 circule, et une étape 12 de capture d'une vidéo est réalisée, suivie d'une étape 13 de reconnaissance d'une plaque d'immatriculation dans la capture d'image vidéo 16, suivie d'une étape d'extraction 14 de la séquence 15 de caractères contenue dans l'image 16 de la plaque d'immatriculation.

Lors de l'étape 13 de reconnaissance d'une plaque d'immatriculation automobile dans la capture d'image vidéo 16, un système de génération de données de synthèse permet d'effectuer l'entrainement du réseau de neurones 1 sur une masse de données suffisante de la base de données artificielle 7 pour atteindre les performances de reconnaissance attendues.

Lors de l'étape d'extraction 14 de la séquence 15 de caractères contenue dans l'image 16 de la plaque d'immatriculation, d'une part une fonction de reconnaissance permet de localiser une partie de l'image contenant la séquence de caractères cherchée, et d'autre part un modèle d'apprentissage en profondeur basé sur un réseau de neurones 1 est utilisé pour reconnaître la séquence 15 de caractères, ce qui offre une grande robustesse, autorisant la reconnaissance de séquences 15 de caractères, avec des luminosités variables, des angles de vue différents, des polices variées de caractères, etc...

Le modèle d'apprentissage en profondeur basé sur un réseau de neurones 1 permet de reconnaître n'importe quelle séquence de N caractères, les caractères étant des chiffres et/ou des lettres et/ou des séparations de type « -», tout en restant compatible avec la contrainte temps réel.

Ce modèle d'apprentissage en profondeur basé sur un réseau de neurones 1 peut également être utilisé pour reconnaître n'importe quelle séquence de caractères dans les images, en dehors du cas d'utilisation pour la reconnaissance de plaque d'immatriculation, à condition bien sûr de disposer ou de réaliser la base de données artificielle de départ destinée à faire effectuer au réseau de neurones son apprentissage en profondeur.

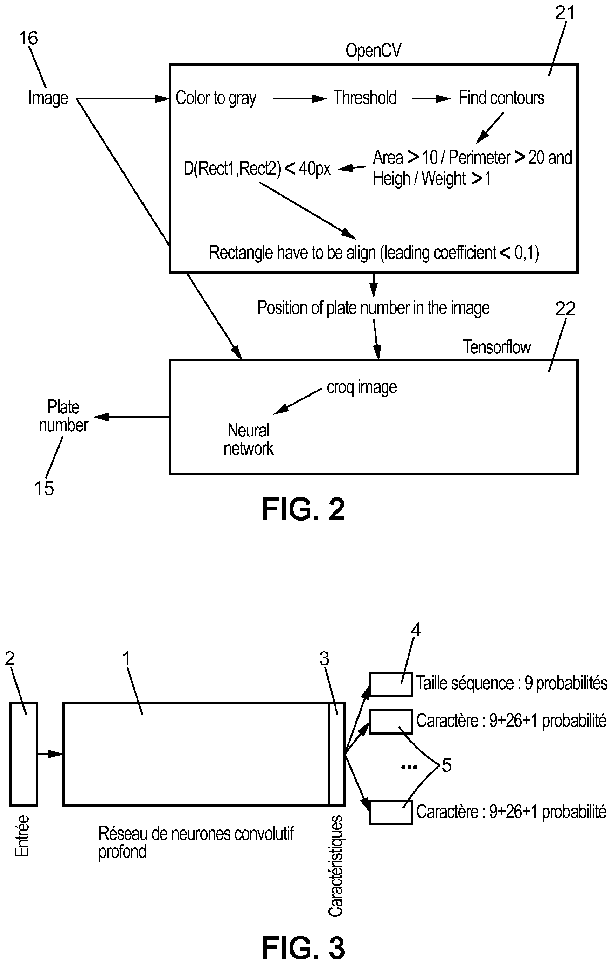

La figure 2 représente schématiquement un exemple de listing informatique en langue anglaise pour les deux bibliothèques de logiciels informatiques en langue anglaise que sont « OpenCV » et « TensorFlow », sous forme d'un organigramme d'implémentation conforme à un mode de réalisation de l'invention.

L'image 16 va subir une série 21 de traitements dans la bibliothèque de logiciels « OpenCV » avant de subir une autre série 22 de traitements dans la bibliothèque de logiciels « TensorFlow » pour obtenir la séquence 15 de caractères sur la plaque d'immatriculation.

La série 21 de traitements comprend successivement : une transformation de la couleur en niveaux de gris, un seuillage, une analyse de contours, l'extraction d'un bandeau rectangulaire donnant la position de la séquence 15 de caractères de la plaque d'immatriculation dans l'image 16 capturée par vidéo.

La série 22 de traitements comprend successivement : une extraction de la zone utile comprenant d'une part la séquence 15 de caractères à extraire et d'autre part le fond uni situé au voisinage immédiat de cette séquence 15 de caractères à extraire, ceci afin de s'affranchir du reste de l'image qui peut contenir beaucoup plus de bruit car n'étant pas uni, suivie de l'étape de reconnaissance par le réseau de neurones 1 aboutissant à l'obtention de la séquence 15 de caractères contenue dans la plaque d'immatriculation de la voiture.

La figure 3 représente schématiquement un exemple du fonctionnement du réseau de neurones d'une part formé selon le procédé de formation d'un réseau de neurones et d'autre part utilisé selon le procédé de reconnaissance d'une séquence de caractères basé sur le procédé de formation d'un réseau de neurones selon un mode de réalisation de l'invention.

Que ce soit pour le procédé de formation du réseau de neurones 1 ou pour le procédé de reconnaissance d'une séquence de caractères basé sur le procédé de formation d'un réseau de neurones 1, le réseau de neurones 1 reçoit une image en entrée 2 et donne en sortie des caractéristiques 3 qui se présentent sous la forme d'un tableau de probabilités. Ce tableau de probabilités comprend 9 valeurs de probabilités pour la taille 4 de la séquence et 36 valeurs de probabilités pour chacun des caractères 5 de la séquence qui peut être un chiffre, 9 valeurs de probabilités, une lettre, 26 valeurs de probabilités, ou la séparation « - », 1 valeur de probabilité.

Le problème du réseau de neurones 1 peut être considéré comme un problème de classification. En effet, pour chaque caractère 5 trouvé sur l'image, il faut déterminer une valeur de probabilité d'appartenir à une classe. Pour chaque caractère 5, le nombre de classes possibles est 9+26+1=36, ce qui correspond à 9 chiffres, 26 lettres et une séparation « - ». Pour chaque caractère 5, il y a donc 36 classes de probabilités.

Le réseau de neurones 1 va donner en sortie un tableau de probabilités (« softmax output » en langue anglaise) qui, au lieu d'indiquer simplement à quelle classe une image en entrée appartient, indique ici, 9 valeurs de probabilités dans un premier tableau pour déterminer la taille 4 de la séquence, puis 9 tableaux suivantes contenant chacun 36 valeurs de probabilités pour déterminer respectivement quels sont les 9 caractères 5.

Le réseau de neurones 1 utilise une fonction de coût qui est l'entropie croisée laquelle est particulièrement adaptée pour comparer les similitudes entre deux distributions de probabilités. Il s'agit alors de minimiser l'erreur entre une image en entrée 2 dont la séquence de caractères est connue et la prévision de séquence de caractères donnée en sortie par le réseau de neurones 1. En sortie du réseau de neurones 1, se trouvent 10 caractéristiques qui correspondent chacune à une distribution de probabilité, 9 pour les caractères et 1 pour la taille de la séquence. Ainsi, 10 entropies croisées sont évaluées, une par caractéristique 3 de sortie. 10 fonctions de coût sont obtenues lesquelles sont simultanément minimisées. La somme de ces fonctions de coût donne la fonction de coût globale. Puisque la taille 4 de la séquence vaut au maximum 9 caractères 5, les fonctions de coût strictement supérieures à 9 sont exclues. Alternativement, on peut n'évaluer que 9 entropies croisées, celles des caractères et ne pas intégrer celle de la taille 4 de la séquence dans l'évaluation des entropies croisées.

En entrée 2 du réseau de neurones 1 se trouve une image qui est transmise au travers des couches du réseau de neurones 1, par exemple au nombre de 7 couches, et de donner en caractéristiques 3 de sortie les tableaux de valeurs de probabilités permettant ensuite d'extraire la séquence de caractères recherchée.

La topologie du réseau de neurones 1 a été déterminée avec la bibliothèque de logiciels « TensorFlow », et le réseau de neurones 1 a ensuite réalisé son étape d'apprentissage également en utilisant cette bibliothèque de logiciels « TensorFlow ».

La bibliothèque de logiciels « TensorFlow » réalise des opérations mathématiques sur les tenseurs qui sont des matrices multidimensionnelles.

La stratégie de charge d'ensembles de données est basée sur des queues asynchrones. Une queue est réalisée qui contient les fichiers à charger et les opérations à réaliser sur ces fichiers, comme par exemple lecture, décodage, redimensionnement, extraction, etc...

L'enrichissement des données, comme l'extraction aléatoire (« random crop » en langue anglaise), la revue aléatoire (« random flip » en langue anglaise), le contraste aléatoire (« random contrast » en langue anglaise) est également réalisé à ce moment-là pour ajouter les opérations d'enrichissement de données sur la queue.

Les queues sont remplies avec les données, et de manière asynchrone, le réseau de neurones 1 peut recevoir en entrée ces données traitées.

Une liste python (python est une marque déposée) est créée sur toutes les images jpeg du jeu de données disponible. Simultanément, une autre liste python (python est une marque déposée) est créée, elle contient les étiquettes (« labels » en langue anglaise). Pour chaque élément x, on a le chemin de l'image et l'étiquette de cette image. La queue est créée avec les chemins d'image et les étiquettes. Les opérations requises sont ajoutées à la queue pour donner un lot qui peut être utilisé par le réseau de neurones 1.

Pour réaliser l'apprentissage du réseau de neurones 1, tout d'abord une opération d'initialisation des pondérations est effectuée. En effet, plus la stratégie d'initialisation des pondérations est bonne, plus le gain de temps requis pour réaliser l'apprentissage du réseau de neurones 1 est important. Un initialiseur de Xavier est utilisé, car les résultats obtenus sont notablement meilleurs qu'avec un initialiseur aléatoire classique. Ensuite, une opération d'optimisation est réalisée, grâce à une fonction de coût qui est minimisée par un optimiseur d'Adam lequel donne également de bons résultats.

Deux scripts python (python est une marque déposée) sont utilisés, l'un pour l'apprentissage du réseau de neurones 1, et l'autre pour tester le réseau de neurones 1. Pour partager les données entre scripts, des points de contrôle sont réalisés (« checkpoints » en langue anglaise) lesquels contiennent les valeurs numériques d'une liste de tenseurs. Toutes les pondérations du réseau de neurones 1 sont conservées au niveau de points de contrôle durant l'apprentissage du réseau de neurones 1. Il suffit alors de charger l'un de ces points de contrôle pour pouvoir effectuer des tests sur le réseau de neurones 1. Durant l'apprentissage du réseau de neurones 1, les points de contrôle sont lus et chargés dans la bibliothèque de logiciels « TensorFlow ».

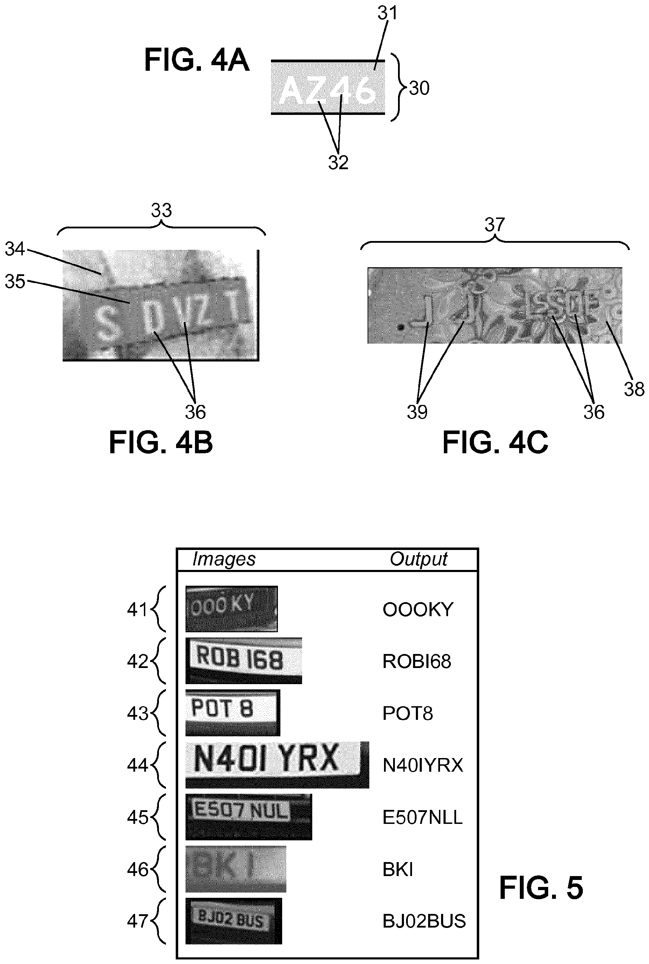

Les figures 4A, 4B et 4C représentent des exemples d'images de séquences de caractères incluses dans la base de données artificielle utilisée pour l'apprentissage du réseau de neurones selon un mode de réalisation de l'invention.

Après l'installation de la bibliothèque de logiciels « TensorFlow », et l'implémentation de la topologie globale du réseau de neurones 1, est ensuite réalisée l'opération de création de la base de données artificielle de séquences de caractères permettant d'affiner la structure et le fonctionnement du réseau de neurones, en modifiant le nombre de couches du réseau de neurones ou la taille de ses convolutions.

A partir d'un premier panel de seulement 1000 images de séquences réelles de caractères, ce qui est habituellement largement insuffisant pour réaliser l'apprentissage d'un réseau de neurones profond, ce premier jeu de données a été utilisé pour tester le réseau de neurones obtenu par apprentissage profond à l'aide de la base de données artificielle créée par génération aléatoire et transformations géométriques et colorimétriques.

Une première partie de la base de données artificielle contient environ 400.000 images en noir et blanc du type de celle de la figure 4A.

La figure 4A représente une image 30 dans laquelle une séquence droite de caractères 32 uniformément espacés peut être extraite d'un fond uni 31.

Une deuxième partie de la base de données artificielle contient environ 400.000 images obtenues par diverses transformations évoluées réalisées à partir des 400.000 images en noir et blanc du type de celle de la figure 4A de la première partie de la base de données artificielle. Ces transformations évoluées incluent notamment des transformations géométriques linéaires, des changements de couleur, des modifications aléatoires du fond sur lequel se trouve la séquence de caractères à reconnaître, etc...

Le réseau de neurones est ensuite testé sur des images représentant des séquences réelles de caractères à reconnaître, par exemple des images de vraies plaques d'immatriculation automobile, correspondant ici au premier panel réduit d'environ 1000 séquences réelles de caractères à reconnaître sur 1000 captures vidéo de plaques réelles d'immatriculation automobile, ce qui permet ensuite de modifier et d'enrichir la base de données artificielle.

Cette base de données artificielle contient notamment beaucoup de séquences de caractères qui font varier les espaces entre caractères et/ou qui ont différentes couleurs de fond et différentes tailles de fond, le fond étant ce qui entoure la séquence de caractères à reconnaître en particulier dans son voisinage immédiat, le tout afin de mieux coller à la diversité des plaques d'immatriculation automobile réelles afin d'améliorer la robustesse du réseau de neurones ainsi formé.

Le réseau de neurones obtenu avait 7 couches, et il avait été entraîné notamment avec des images en rouge vert bleu d'une taille de 120 pixels par 80 pixels. Le temps d'apprentissage du réseau de neurones a duré 2 jours sur une base de données artificielle mélangeant les deux parties précédemment décrites à parts égales et présentant un volume global d'environ 800.000 séquences de caractères artificiellement créées.

La figure 4B représente une image 33 dans laquelle une séquence penchée de caractères 36 un peu irrégulièrement espacés peut être extraite d'un fond uni 35 lui-même disposé au milieu d'un voisinage lointain uni 34.

La figure 4C représente une image 37 dans laquelle une séquence penchée de caractères 39 très irrégulièrement espacés peut être extraite d'un fond bariolé 38.

La figure 5 représente des exemples de résultat d'identification montrant l'efficacité du procédé de reconnaissance d'une séquence de caractères basé sur le procédé de formation d'un réseau de neurones selon un mode de réalisation de l'invention.

La figure 5 présente 7 cas réels de reconnaissances de plaques d'immatriculation réelles dans lesquels on peut constater la grande efficacité et la grande robustesse du procédé de reconnaissance d'une séquence de caractères basé sur le procédé de formation d'un réseau de neurones selon un mode de réalisation de l'invention, les différentes plaques d'immatriculation étant de toutes tailles, de toutes couleurs, de toutes polices et de toutes orientations.

Sur la plaque 41, aucune erreur de reconnaissance. Sur la plaque 42, bonne reconnaissance des lettres et des chiffres, avec seulement un 1 pris pour un I. Sur la plaque 43, aucune erreur de reconnaissance. Sur la plaque 44, bonne reconnaissance des lettres et des chiffres, avec seulement un 0 pris pour un O et seulement un 1 pris pour un I. Sur la plaque 45, bonne reconnaissance des lettres et des chiffres, avec seulement un couple UL pris pour un couple LL. Sur la plaque 46, aucune erreur de reconnaissance. Sur la plaque 47, aucune erreur de reconnaissance.

Globalement, en dépit de quelques légères erreurs pouvant également être commises par des êtres humains, la précision du réseau de neurones, ainsi formé par apprentissage profond de la base de données artificielle, s'est révélée excellente, même dans le cas d'images brouillées ou désorientées ou désaxées. Le réseau de neurones ainsi obtenu détermine à tous les coups le bon nombre de caractères dans la séquence à reconnaître, c'est-à-dire qu'il est infaillible sur la taille de la séquence de caractères à reconnaître. Le réseau de neurones ainsi obtenu extrait et identifie chacun des caractères de la séquence à reconnaître quels que soient les espaces entre les caractères dans la séquence à reconnaître. Le réseau de neurones ainsi obtenu reste également très robuste par rapport au changement d'échelle, car il reconnaît aussi bien les caractères de petite taille que de grande taille ou encore de moyenne taille.

## Revendications

1. Procédé de formation d'un réseau de neurones (1), pour la reconnaissance d'une séquence (15) de caractères (5) dans une image (16), le fond d'image (31, 35, 38) voisin de ladite séquence (15) de caractères (5) étant un fond uni monocolore, l'image étant une plaque d'immatriculation automobile, comprenant :
> une étape de réalisation d'une base de données artificielle (7) de plusieurs séquences (15) de caractères (5) dans des images (16), certaines séquences (15) étant générées aléatoirement, d'autres séquences (15) provenant de transformations de séquences (15) générées aléatoirement,
> une étape d'apprentissage (11), du réseau de neurones (1), à la reconnaissance d'une séquence (15) de caractères (5) dans une image (16), directement sur au moins certaines desdites séquences (15) de ladite base de données artificielle (7), sans pré-découpage préalable de ces séquences (15) en leurs caractères constitutifs,
> l'étape d'apprentissage (11) du réseau de neurones (1) utilisant, pour chaque caractère (5) de la séquence (15) de caractères (5) à reconnaître, un tableau de probabilité représentatif dudit caractère (5),
> l'étape d'apprentissage (11) du réseau de neurones (1) utilisant, pour comparer deux distributions de probabilités représentatives de la séquence (15) de caractères (5) à reconnaître, une fonction de coût,
> la fonction de coût de la séquence (15) de caractères (5) étant la somme des fonctions de coût de chaque caractère (5).

2. Procédé de formation d'un réseau de neurones selon la revendication 1, **caractérisé en ce que** ladite fonction de coût est basée sur l'entropie croisée.

3. Procédé de formation d'un réseau de neurones selon l'une quelconque des revendications 1 à 2, **caractérisé en ce que** ladite fonction de coût est minimisée par un optimiseur d'Adam.

4. Procédé de formation d'un réseau de neurones selon l'une quelconque des revendications précédentes, **caractérisé en ce que** le chargement des données à l'entrée (2) du réseau de neurones (1) se fait par une queue asynchrone qui contient les fichiers à charger et les opérations à effectuer sur ces fichiers.

5. Procédé de formation d'un réseau de neurones selon l'une quelconque des revendications précédentes, **caractérisé en ce que** l'initialisation des poids dans le réseau de neurones (1) est effectuée par un initialiseur de Xavier.

6. Procédé de reconnaissance d'une séquence de caractères dans une image, comprenant une étape de reconnaissance d'une séquence (15) de caractères (5) dans une image (16), par un réseau de neurones (1) formé par un procédé de formation selon l'une quelconque des revendications précédentes.

7. Procédé de reconnaissance d'une séquence de caractères dans une image selon la revendication 6, **caractérisé en ce que** ladite étape de reconnaissance (11) est précédée d'une étape d'extraction, de la séquence (15) de caractères (5) et du fond d'image (31, 35, 38) voisin de cette séquence (15) de caractères (5), hors du reste de l'image (16), seuls ladite séquence (15) de caractères (5) et ledit fond d'image (31, 35, 38) voisin de cette séquence (15) de caractères (5), à l'exclusion dudit reste de l'image (16), étant fournis au réseau de neurones (1).

8. Procédé de reconnaissance d'une séquence de caractères dans une image selon l'une quelconque des revendications 6 à 7, **caractérisé en ce que** ladite étape de reconnaissance est effectuée en temps réel sur un flux vidéo d'images (16) incluant les séquences (15) de caractères (5) à reconnaître, avec un flux vidéo supérieur à 10fps ou avec un flux vidéo supérieur à 20fps.

## Patentansprüche

1. Verfahren zum Bilden eines neuronalen Netzes (1) für das Erkennen einer Sequenz (15) von Zeichen (5) in einem Bild (16),
wobei der Bild-Hintergrund (31, 35, 38) benachbart zu der Sequenz (15) von Zeichen (5) ein einfarbiger Hintergrund ist, wobei das Bild ein Automobil-Nummernschild ist, umfassend:
- einen Schritt eines Erstellens einer künstlichen Datenbank (7) von mehreren Sequenzen (15) von Zeichen (5) in Bildern (16), wobei bestimmte Sequenzen (15) zufällig erzeugt werden, wobei andere Sequenzen (15) aus Transformationen von Sequenzen (15) abgeleitet werden, welche zufällig erzeugt werden,
- einen Lernschritt (11) des neuronalen Netzes (1) eines Erkennens einer Sequenz (15) von Zeichen (5) in einem Bild (16), direkt auf wenigstens bestimmten der Sequenzen (15) der künstlichen Datenbank (7) ohne ein vorheriges Vor-Unterteilen dieser Sequenzen (15) in ihre Konstituenten-Zeichen,
- wobei der Lernschritt (11) des neuronalen Netzes (1) für jedes Zeichen (5) der zu erkennenden Sequenz (15) von Zeichen (5) eine für dieses Zeichen (5) repräsentative Wahrscheinlichkeitstabelle verwendet,
- wobei der Lernschritt (11) des neuronalen Netzes (1) für ein Vergleichen von zwei Wahrscheinlichkeitsverteilungen, welche die zu erkennende Sequenz (15) von Zeichen (5) repräsentieren, eine Kostenfunktion verwendet,
- wobei die Kostenfunktion der Sequenz (15) von Zeichen (5) die Summe von Kostenfunktionen von jedem Zeichen (5) ist.

2. Verfahren zum Bilden eines neuronalen Netzes nach Anspruch 1, **dadurch gekennzeichnet, dass** die Kostenfunktion auf der Kreuzentropie basiert.

3. Verfahren zum Bilden eines neuronalen Netzes nach einem der Ansprüche 1 bis 2, **dadurch gekennzeichnet, dass** die Kostenfunktion durch einen Adam-Optimierer minimiert wird.

4. Verfahren zum Bilden eines neuronalen Netzes nach einem der vorhergehenden Ansprüche, **dadurch gekennzeichnet, dass** das Laden von Daten bei der Eingabe (2) des neuronalen Netzes (1) durch eine asynchrone Warteschlange ausgeführt wird, welche die zu ladenden Dateien und die auf diese Dateien anzuwendenden Operationen umfasst.

5. Verfahren zum Bilden eines neuronalen Netzes nach einem der vorhergehenden Ansprüche, **dadurch gekennzeichnet, dass** das Initialisieren von Gewichten in dem neuronalen Netz (1) durch ein Xavier-Initialisierungselement ausgeführt wird.

6. Verfahren zum Erkennen einer Sequenz von Zeichen in einem Bild, umfassend einen Schritt eines Erkennens einer Sequenz (15) von Zeichen (5) in einem Bild (16) durch ein neuronales Netz (1), welches durch ein Verfahren zum Bilden nach einem der vorhergehenden Ansprüche gebildet wird.

7. Verfahren zum Erkennen einer Sequenz von Zeichen in einem Bild nach Anspruch 6, **dadurch gekennzeichnet, dass** dem Schritt des Erkennens (11) ein Schritt eines Extrahierens der Sequenz (15) von Zeichen (5) und des Bild-Hintergrunds (31, 35, 38) benachbart zu dieser Sequenz (15) von Zeichen (5) von dem Rest des Bilds (16) voransteht, wobei lediglich die Sequenz (15) von Zeichen (5) und der Bild-Hintergrund (31, 35, 38) benachbart zu dieser Sequenz (15) von Zeichen (5) unter Ausschluss des Rests des Bilds (16) zu dem neuronalen Netz (1) bereitgestellt werden.

8. Verfahren zum Erkennen einer Sequenz von Zeichen in einem Bild nach einem der Ansprüche 6 bis 7, **dadurch gekennzeichnet, dass** der Schritt des Erkennens in Echtzeit auf eine Abfolge von Videobildern (16) ausgeführt wird, welche zu erkennende Sequenzen (15) von Zeichen (5) umfassen, mit einer Video-Abfolgerate größer als 10fps oder mit einer Video-Abfolgerate größer als 20fps.

## Claims

1. Method for training a neural network (1), for the recognition of a sequence (15) of characters (5) in an image (16), the image background (31, 35, 38) adjacent to said sequence (15) of characters (5) being a single-colour plain background, the image being a motor vehicle registration plate, comprising:
> a step of creating an artificial database (7) of a plurality of sequences (15) of characters (5) in images (16), some sequences (15) being generated randomly, other sequences (15) being derived from transformations of sequences (15) generated randomly,
> a learning step (11) that teaches the neural network (1) to recognise a sequence (15) of characters (5) in an image (16), directly on at least some of said sequences (15) of said artificial database (7), without a preliminary subdividing of these sequences (15) into their component characters,
> the learning step (11) which teaches the neural network (1) using, for each character (5) of the sequence (15) of characters (5) to be recognised, a probability table representative of said character (5),
> the learning step (11) which teaches the neural network (1) using a cost function to compare two probability distributions representative of the sequence (15) of characters (5) to be recognised,
> the cost function of the sequence (15) of characters (5) being the sum of the cost functions of each character (5).

2. Method for training a neural network according to claim 1, **characterised in that** said cost function is based on cross entropy.

3. Method for training a neural network according to any one of claims 1 to 2, **characterised in that** said cost function is minimised by an ADAM optimiser.

4. Method for training a neural network according to any one of the preceding claims, **characterised in that** the loading of data as input (2) to the neural network (1) occurs via an asynchronous queue which contains the files to be loaded and the operations to be performed on these files.

5. Method for training a neural network according to any one of the preceding claims, **characterised in that** the initialisation of weights in the neural network (1) is performed by a Xavier initialiser.

6. Method for recognising a character sequence in an image, comprising a step of recognising a sequence (15) of characters (5) in an image (16) by means of a neural network (1) trained by a training method according to any one of the preceding claims.

7. Method for recognising a character sequence in an image according to claim 6, **characterised in that** the recognition step (11) is preceded by a step of extracting the sequence (15) of characters (5) and the image background (31, 35, 38) adjacent to this sequence (15) of characters (5), from the rest of the image (16), only said sequence (15) of characters (5) and said image background (31, 35, 38) adjacent to this sequence (15) of characters (5), excluding said rest of the image (16), being provided to the neural network (1).

8. Method for recognising a character sequence in an image according to any one of claims 6 to 7, **characterised in that** said recognition step is carried out in real time on a video stream of images (16) including the sequences (15) of characters (5) to be recognised, with a video stream greater than 10fps, or with a video stream greater than 20fps.
